# EUROPEAN PATENT APPLICATION

(11) **EP 1 679 883 A1**
(43) Date of publication of application: **12.07.2006**
(21) Application number: 04736141.5
(22) Date of filing: 04.06.2004
(51) Int. Cl.: H04N 5/232, H04N 5/225, H04N 5/76

(54) **IMAGING APPARATUS**

(30) Priority: 31.10.2003 JP 2003371370
(71) Applicant: MATSUSHITA ELECTRIC INDUSTRIAL CO., LTD., Kadoma-shi, Osaka 571-8501 (JP)
(72) Inventor: ASADA, Ryoji, Osaka 573-0071 (JP); NISHIKAWA, Syoji, Nara 631-0006 (JP)
(74) Representative: Grünecker, Kinkeldey, Stockmair & Schwanhäusser Anwaltssozietät
(86) International application number: PCT/JP2004/008184
(87) International publication number: WO 2005/043892

(57) **Abstract**

An object is to provide an imaging apparatus which can change a frame rate and so on as intended during photographing and improve operability for image creation. The imaging apparatus comprises an automatic switch setting section for storing frame modes, the set values of photographing parameters, and the set times of the parameters. According to an operation state of an operation switch, a system control section automatically switches the frame modes and the photographing parameters based on the data of the automatic switch setting section.

## Description

### Technical Field

The present invention relates to an imaging apparatus used in the field of an imaging system for production, in which image creation is important.

### Background Art

A conventional imaging apparatus is disclosed in Japanese Patent Laid-Open No. 2002-152569.

This apparatus enables a video camera to obtain an imaging signal similar to that of a film camera in response to the digital cinema of recent years. Particularly a frame rate can be freely changed for image creation unique to a film camera.

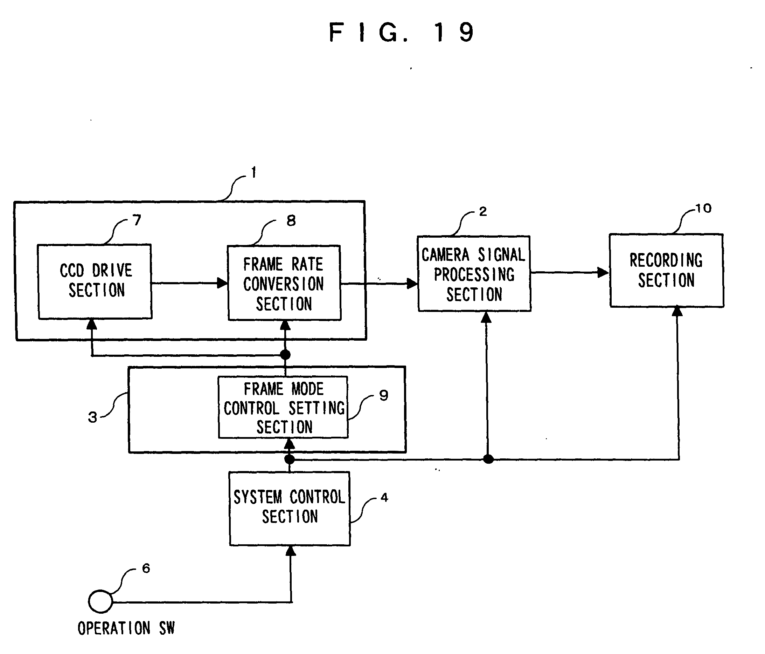

The imaging apparatus is shown in FIG. 19.

An imaging section 1 is constituted of a CCD drive section 7 and a frame rate conversion section 8. The CCD drive section 7 can realize various frame rates according to a drive pulse. The frame rate conversion section 8 converts various frame rates outputted from the CCD drive section 7 into predetermined frame rates. Reference numeral 9 denotes a frame mode control setting section provided in a control setting section 3 which sets a frame mode or a photographing parameter of the imaging section 1. The frame mode control setting section 9 controls the CCD drive section 7 and the frame rate conversion section 8.

Reference numeral 2 denotes a camera signal processing section which performs basic processing such as gamma correction and matrix processing of the imaging apparatus. Reference numeral 10 denotes a recording section.

Reference numeral 6 denotes an operation switch which includes various operation switches of a gain selector switch and a menu switch. Reference numeral 4 denotes a system control section which controls the entire imaging apparatus according to a usage state designated by the operation switch 6.

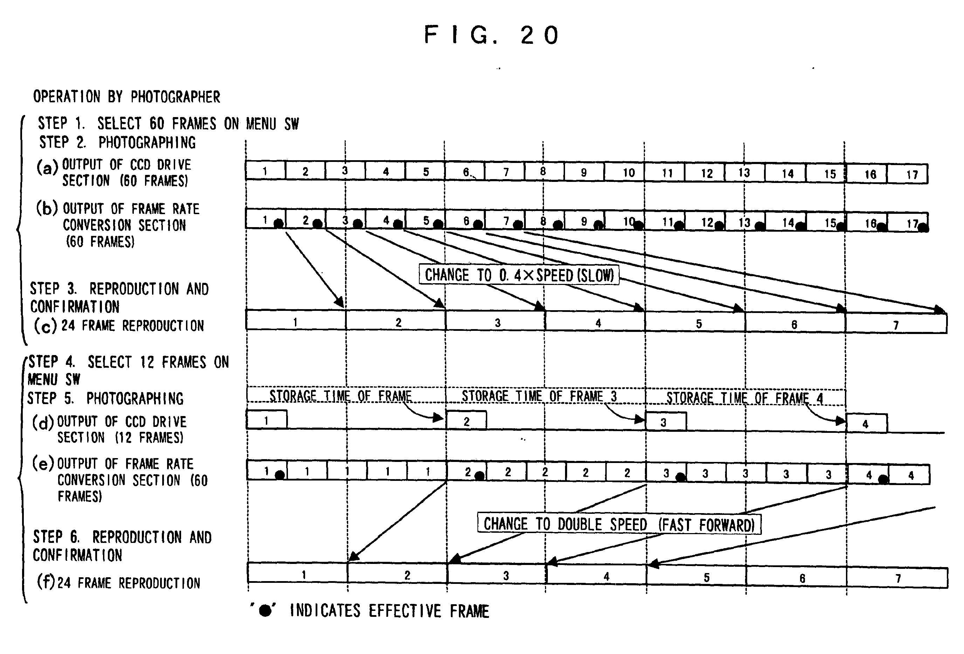

As shown in FIG. 20, the conventional imaging apparatus configured thus can change a frame rate. In this case, a frame rate is made variable and an imaging signal of slow motion and an imaging signal of fast forward are obtained as film signals (signals of 24 frames per second). A delay caused by the processing of the frame rate conversion section 8 is not shown in FIG. 20. When a film signal is obtained, progressive scanning is used and thus a frame rate should be represented as a "24P (progressive) frame rate." In the following explanation, "progressive" is omitted and simply 24 frames or the like will be indicated.

When a slow motion image is obtained

In this case, the apparatus is operated in step 1, step 2, and step 3 of FIG. 20.

When a slow motion image is obtained, in step 1, a photographer operates the menu switch of the operation switch 6 to select a frame rate of 60 for the imaging apparatus.

The system control section 4 instructed by the operation of the operation switch 6 controls the CCD drive section 7 such that the imaging apparatus has a frame rate of 60 during photographing as shown in step 2(a). The systemcontrol section 4 also outputs a control signal to the frame rate conversion section 8 and makes a conversion such that an output signal to the camera signal processing section 2 has a frame rate of 60 as shown in step 2(b).

In this example, an object is to obtain a slow motion image from a frame rate of 60 of the output signal of the frame rate conversion section 8. Along with the output signal of the frame rate conversion section 8, a flag of an effective frame is also outputted that indicates which frame is effective during reproduction. The output signal of the frame rate conversion section 8 is subjected to basic processing of the imaging apparatus in the camera signal processing section 2. The processing includes gamma correction and matrix correction. Then, the flag signal of an effective frame is recorded with an imaging signal on a recording medium by the recording section 10.

In the case where the recording medium, on which the imaging signal of 60 frames per second has been recorded thus by the recording section 10, is slowly reproduced at 0.4x speed to confirm the reproduction of a slow motion image, effective frames are extracted by another apparatus and are reproduced as 24 frames as shown in step 3. Thus, as shown in FIG. 20(c), it is possible to obtain a reproduction signal whose time axis is extended by 2.5 times, that is, a slow-motion signal of 0.4xspeed. In this case, all frames are extracted as effective frames.

When a fast-forward imaging signal is obtained

In this case, the apparatus is operated in step 4, step 5, and step 6 of FIG. 20.

When a fast-forward image is obtained, in step 4, a photographer operates the menu switch of the operation switch 6 to select a frame rate of 12 for the imaging apparatus.

The system control section 4 instructed by the operation of the operation switch 6 controls the CCD drive section 7 such that the imaging apparatus has a frame rate of 12 (12 frames per second) during photographing as shown in step 5(d). The system control section 4 also outputs a control signal to the frame rate conversion section 8 and makes a conversion such that an output signal to the camera signal processing section 2 has a frame rate of 60. To be specific, the same frame is duplicated and outputted such that an output frame rate is always 60. In this case, the same frame is outputted five times at a rate of 60 frames. An effective frame is added to one of the frames (in this case, the first frame). In the processing of the frame rate conversion section 8 and later, since the frame rate is converted into 60 frames, the processing is similar to the case where the CCD drive section 7 has a frame rate of 60 frames. A signal shown in FIG. 20(e) is recorded by the recording section 10.

In the case where the recording medium, on which the imaging signal of 60 frames per second has been recorded thus by the recording section 10, is reproduced by another apparatus to confirm the reproduction of a fast-forward image of double speed, as shown in step 6(f), effective frames are extracted by another apparatus and reproduced as 24 frames. Thus, it is possible to obtain a fast-forward signal of double speed whose time axis is reduced by 0.5 times.

In this way, the conventional imaging apparatus can perform variable-speed photographing, thereby achieving the same image creation as a film camera.

However, in the conventional imaging apparatus, when a frame rate is made variable, the photographer has to operate the operation switch 6 and select a mode before photographing.

Further, when a frame rate is changed for image creation during photographing, a manual operation of the photographer affects an image and thus desired image creation cannot be obtained.

Regarding an imaging apparatus for producing a film material, an object of the present invention is to provide an imaging apparatus which allows a frame rate and so on to be freely changed during photographing and improves operability for image creation.

### Disclosure of the Invention

An imaging apparatus according to claim 1 of the present invention comprises a control setting section for setting a frame mode of an imaging section or a photographing parameter of the imaging section, an automatic switch setting section in which setting contents to be automatically switched in the control setting section and a set time for implementing the contents are set, and a system control section which detects an operation of an operation switch and automatically switches the setting contents of the control setting section according to the setting of the automatic switch setting section.

According to claim 1, in an imaging apparatus according to claim 2 of the present invention, the system control section controls the control setting section in such a manner as to detect an operation of the operation switch and switch at least one of the frame mode and the photographing parameter according to the setting of the automatic switch setting section.

According to claim 1, in an imaging apparatus according to claim 3 of the present invention, the system control section controls the control setting section in such a manner as to detect an operation of the operation switch and switch at least one of the frame mode and the photographing parameter according to the setting of the automatic switch setting section, the system control section detects that the operation switch is operated again in the set time of the current setting, and the system control section forcibly performs automatic switching to the subsequent setting contents of the automatic switch setting section.

According to claim 2 or 3, in an imaging apparatus according to claim 4 of the present invention, the system control section detects an operation of the operation switch and automatically switches the frame mode and the photographing parameter in series in a predetermined order.

According to claim 2 or 3, in an imaging apparatus according to claim 5 of the present invention, the system control section detects an operation of the operation switch and automatically switches the frame mode and the photographing parameter in parallel in a predetermined order according to the setting contents of the automatic switch setting section.

According to claim 1, in an imaging apparatus according to claim 6 of the present invention, the system control section controls the control setting section in such a manner as to detect an operation of the operation switch and switch at least one of the frame mode and the photographing parameter according to the setting of the automatic switch setting section, the system control section detects that the operation switch is operated again in the set time of the current setting, and the system control section does not forcibly terminate the current setting contents in the set time of the automatic switch setting section but automatically extends the set time.

According to claim 1, an imaging apparatus according to claim 7 of the present invention further comprises a display section for displaying a state of the current frame mode or photographing parameter.

According to claim 3 or 6, an imaging apparatus according to claim 8 of the present invention further comprises a memory section for storing the history of corrections made to the set time when the operation switch is operated again.

According to claim 3 or 6, an imaging apparatus according to claim 9 of the present invention further comprises a memory section for storing the history of corrections made to the set time when the operation switch is operated again, the system control section can replace the set time of the automatic switch setting section with another according to the records of the memory section.

According to claim 3 or 6, an imaging apparatus according to claim 10 of the present invention further comprises a memory section for storing the history of corrections made to the set time when the operation switch is operated again, and a recording/reproducing section which records and reproduces an imaging signal, the system control section can replace the set time of the automatic switch setting section with another according to the records of the memory section, and the history information of the memory section is recorded with the imaging signal by the recording/reproducing section.

An imaging apparatus according to claim 11 of the present invention comprises a control setting section for setting a frame mode of an imaging section or a photographing parameter of the imaging section, an automatic switch setting section in which the setting contents to be automatically switched in the control setting section and a set time for implementing the contents are set, a system control section for automatically switching the setting contents of the control setting section according to the setting of the automatic switch setting section, and an imaging signal state decision section for deciding an image state of an imaging signal system outputted from the imaging section, wherein the system control section can detect a change point of the image state according to a decision signal of the imaging signal state decision section and automatically switch the setting contents of the control setting section to another state designated by the setting contents of the automatic switch setting.

According to claim 11, in an imaging apparatus according to claim 12 of the present invention, the imaging signal state decision section decides a motion picture/still picture according to the image state of the imaging signal system, and the system control section detects that a decision signal of the imaging signal state decision section changes from a still picture to a motion picture, and automatically switches the setting contents of the control setting section such that a dynamic resolution of the contents is higher than that of the setting contents of the automatic setting section.

According to claim 11, in an imaging apparatus according to claim 13 of the present invention, the imaging signal state decision section decides an amount of noise and a frequency characteristic of an imaging signal of the imaging signal system, and the system control section automatically switches the setting contents of the control setting section, according to the decision signal of the imaging signal state decision section, more suitably for the state of the imaging signal than the setting contents of the automatic setting section.

According to the imaging apparatuses of the present invention, it is possible to achieve an imaging apparatus which can automatically change a frame rate and so on as intended during photographing.

### Brief Description of the Drawings

FIG. 1 is a block diagram showing an imaging apparatus according to (Embodiment 1) of the present invention;
FIG. 2 is an operation explanatory drawing showing a change of a frame rate of (Embodiment 1);
FIG. 3 is a conceptual diagram showing an automatic switch setting section 5 of (Embodiment 1);
FIG. 4 is a diagram showing an image obtained when the imaging apparatus of (Embodiment 1) is used;
FIG. 5 is a block diagram showing an imaging apparatus according to (Embodiment 2) of the present invention;
FIG. 6 is an operation explanatory drawing showing a shutter speed of (Embodiment 2);
FIG. 7 is a diagram showing an image obtained when the imaging apparatus of (Embodiment 2) is used;
FIG. 8 is a diagram showing setting examples of an automatic switch setting section 5 of an imaging apparatus and switching sequences according to (Embodiment 3) of the present invention;
FIG. 9 is a diagram showing a setting example of an automatic switch setting section 5 of an imaging apparatus and switching sequences according to (Embodiment 4) of the present invention;
FIG. 10 is a diagram showing a setting example of the automatic switch setting section 5 of the imaging apparatus and switching sequences according to (Embodiment 4);
FIG. 11 is a block diagram showing an imaging apparatus according to (Embodiment 5) of the present invention;
FIG. 12 is a conceptual diagram showing a display example of a display section 12 according to (Embodiment 5);
FIG. 13 is a block diagram showing an imaging apparatus according to (Embodiment 6) of the present invention;
FIG. 14 is a block diagram showing an imaging apparatus according to (Embodiment 7) of the present invention;
FIG. 15 is a conceptual diagram showing a display example of a display section 12 during reproduction according to (Embodiment 7);
FIG. 16 is a block diagram showing an imaging apparatus according to (Embodiment 8) of the present invention;
FIG. 17 is a conceptual diagram showing the way to perform automatic function switching of frame rates according to (Embodiment 8);
FIG. 18 is a block diagram showing an imaging signal state decision section 15 of (Embodiment 8);
FIG. 19 is a block diagram showing the configuration of a conventional imaging apparatus; and
FIG. 20 is an operation explanatory drawing showing a change of a frame rate of the conventional imaging apparatus.

### Best Mode for Carrying Out the Invention

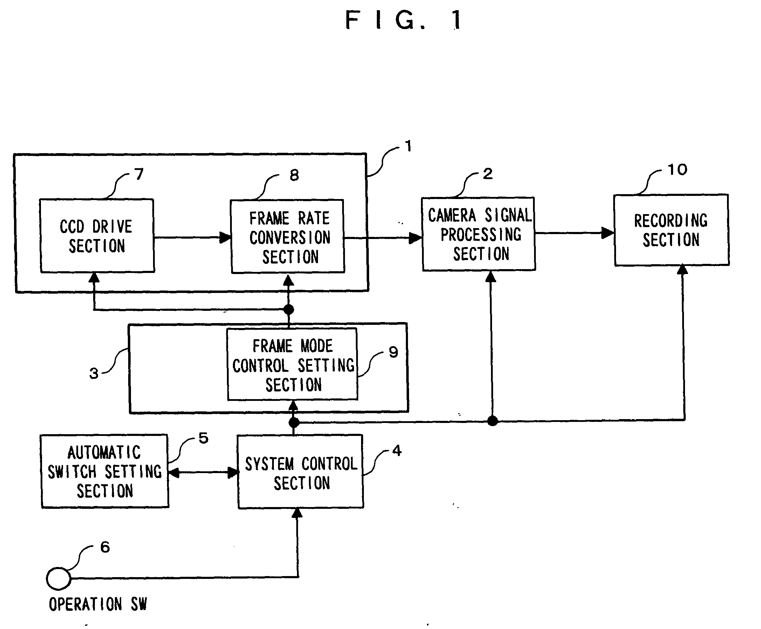

Referring to FIGS. 1 to 18, the following will describe embodiments of the present invention.

### (Embodiment 1)

FIG. 1 shows an imaging apparatus according to (Embodiment 1) of the present invention.

In the imaging apparatus of (Embodiment 1), when an operation switch 6 is operated during photographing, a system control section 4 sequentially reads setting modes and the set times of set values that have been registered in an automatic switch setting section 5 before photographing, and the system control section 4 supplies the modes and set times to a frame mode control setting section 9. The frame mode control setting section 9 causes a CCD drive section 7 and a frame rate conversion section 8, which constitute an imaging section 1, to operate in a state designated by the system control section 4.

In this case, the frame mode is items concerning the specifications of a photographing method that include a frame rate, an aspect ratio, and an interlace/progressive. The automatic switching of a frame rate, which is one of the items, will be described below as an example.

The CCD drive section 7 realizes various frame rates according to a drive pulse. The frame rate conversion section 8 converts various frame rates outputted from the CCD drive section 7 into predetermined frame rates. In this case, the frame mode control setting section 9 is provided as a control setting section 3 which sets a frame mode or a photographing parameter of the imaging section 1.

A camera signal processing section 2 performs basic processing such as gamma correction and matrix processing of on an output signal of the frame rate conversion section 8. Reference numeral 10 denotes a recording section.

As in the conventional example of FIG. 19, the imaging apparatus of (Embodiment 1) can obtain an imaging signal of 24 frames for a film. (Embodiment 1) is different in that the automatic switch setting section 5 is added.

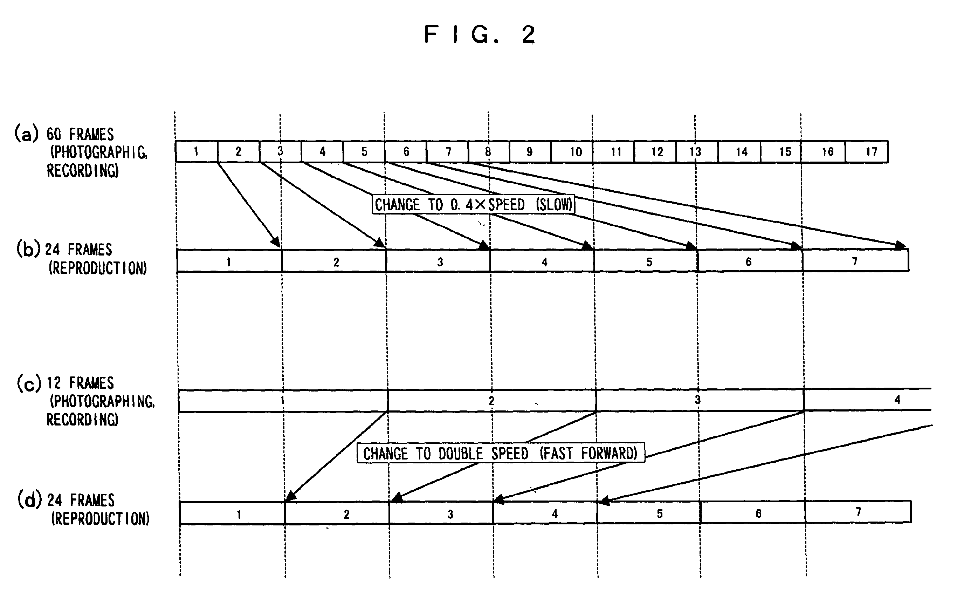

FIG. 2 shows slow motion and fast-forward reproduction as FIG. 20, which is an explanatory drawing showing an operation of changing a frame rate in the conventional example. To be specific, in slow motion reproduction, as shown in FIG. 2(a), photographing is performed in 60 frames (60 frames per second) and recording is performed by the recording section 10. When a recording medium, on which an imaging signal of 60 frames per second has been recorded, is reproduced by another apparatus to confirm the reproduction of a slow motion image, as shown in FIG. 2(b), frames are reproduced as 24 frames, so that a slow signal of 0. 4x speed is obtained with a time axis extended by 2.5 times.

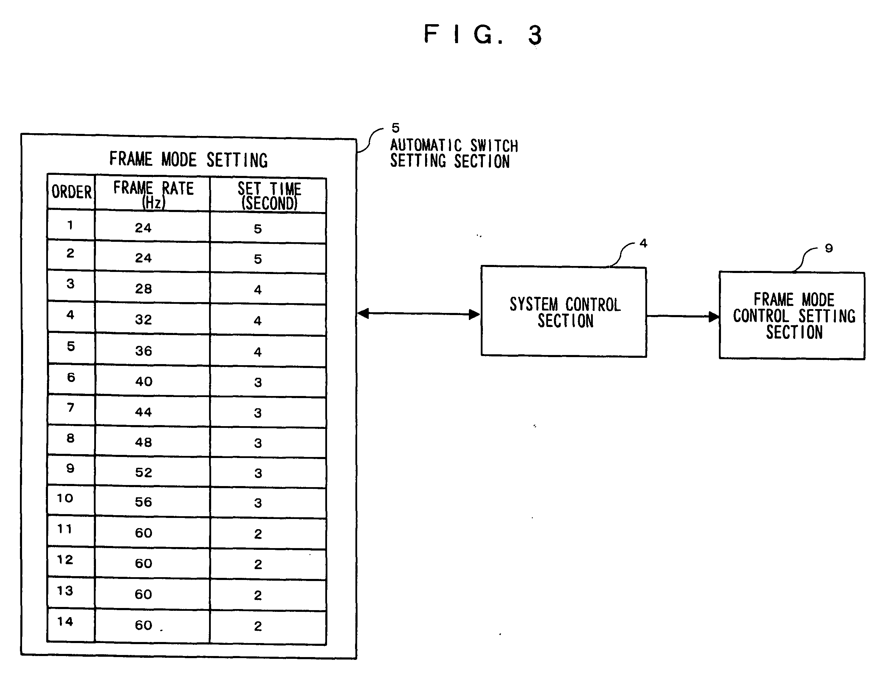

FIG. 3 shows a specific example of the automatic switch setting section 5. According to orders 1 to 14, a frame rate 24P of five seconds, 24P of five seconds, 28P of four seconds, 32Pof four seconds, 36Pof four seconds, 40Pof three seconds, ... are set before photographing.

With this configuration, after the start of photographing, the photographer operates a specific switch of the operation switch 6 with a single touch to supply a trigger signal to the imaging apparatus. Just this operation allows the system control section 4, which includes a microcomputer, to recognize a start cue of the operation switch 6, read predetermined settings, which have been set in orders 1 to 14 of the automatic switch setting section 5, for each frame rate set time, and send set values to the frame mode control setting section 9. Thus, automatic switching can be performed such that a frame rate increases from 24 frames to 60 frames in four frame steps for each set time of FIG. 3 during photographing.

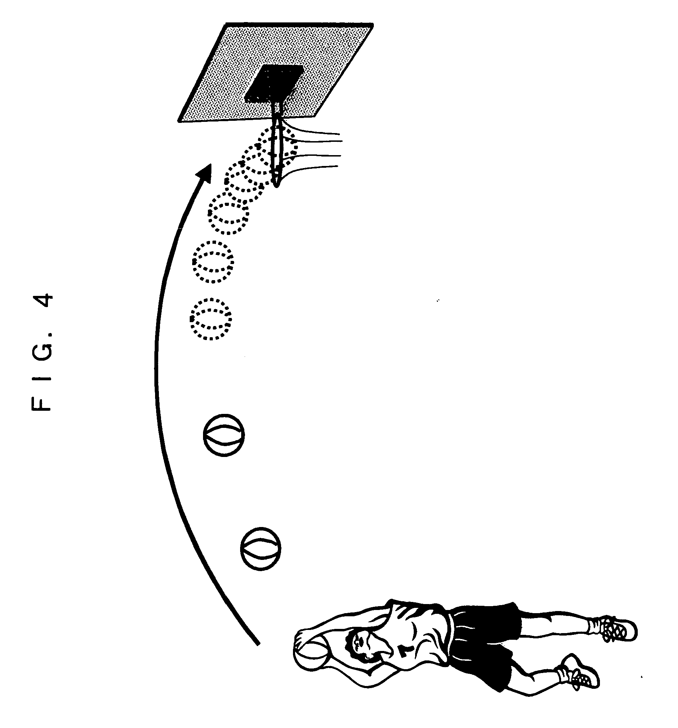

In this way, the frame rates of the automatic switch setting section 5 and the time periods of the set frame rates are set in a proper manner. Thus, upon photographing the shooting of a basket ball as shown in FIG. 4, the photographer performs a one-touch operation on the operation switch 6 and continues photographing when the basket ball is separated from the hands of a player. Just this operation can readily achieve an image in which the orbit of the basket ball coming close to a goal is reproduced gradually in slow motion when the recordingmedium recorded by the recording section 10 is reproduced by another apparatus.

FIGS. 3 and 4 show slow motion reproduction. The same configuration is used in fast-forward reproduction. In the case of fast-forward reproduction, as shown in FIG. 2(c), photographing is performed in 12 frames (12 frames per second) and recording is performed by the recording section 10. A recording medium, on which an imaging signal of 12 frames per second has been recorded, is reproduced by another apparatus so as to reproduce the frames as 24 frames as shown in FIG. 2(d), thereby obtaining a fast-forward signal of double speed with a time axis reduced by 0.5 times. Therefore, the frame rates of the automatic switch setting section 5 and the set times of the periods of frame rates are automatically switched in predetermined frame steps, so that fast-forward reproduction is achieved in which a fast-forward speed can be gradually changed smoothly as compared with the conventional art.

Needless to say, in the automatic switch setting section 5, it is possible to freely set frame rates, the set times of the frame rates, and the orders of the set times.

According to (Embodiment 1) of the present invention, the automatic switch setting section 5 is provided which stores setting data for switching the frame rates for each predetermined time period. Thus, it is possible to automatically switch the frame rates for each setting time, thereby achieving various kinds of image creation.

### (Embodiment 2)

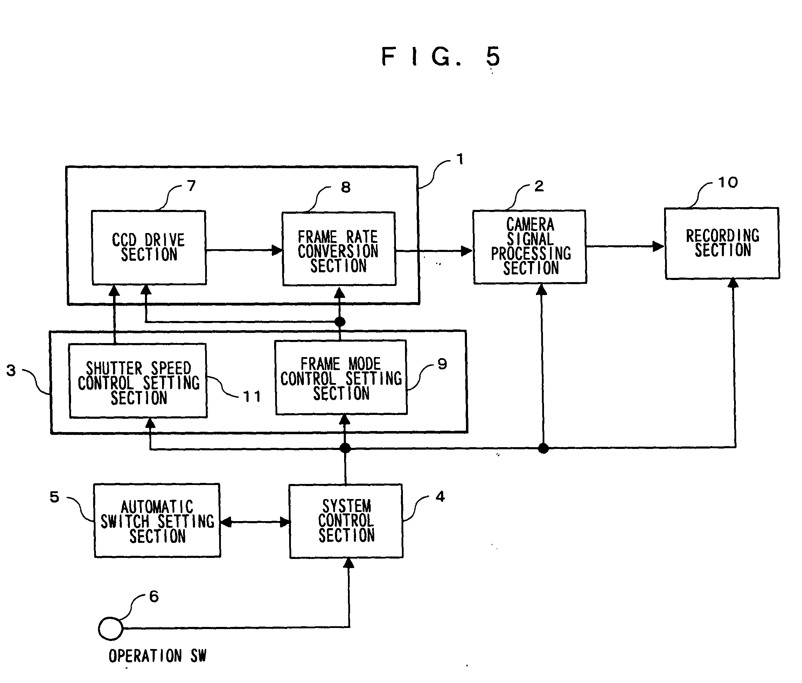

FIG. 5 shows an imaging apparatus according to (Embodiment 2) of the present invention.

In (Embodiment 1), the system control section 4 automatically switches frame modes according to the setting contents of the automatic switch setting section 5 during photographing. In (Embodiment 2), the settings of photographing parameters are automatically changed as well as frame modes. Photographing parameters are items of a photographing state that include a shutter speed, a CCD gain (bright/dark), zoom-in/zoom-out lens control, and an aperture. The following will discuss the case where a shutter speed, which is one of the items, is changed automatically.

To be specific, an automatic switch setting section 5 stores the settings of shutter speeds in addition to the settings of the frame rates of frame modes. When a one-touch operation is performed on an operation switch 6 during photographing, a system control section 4 automatically switches the frame rates of a CCD drive section 7 and a frame rate conversion section 8 via a frame mode control setting section 9 for each set time according to the settings of the automatic switch setting section 5. Accordingly, the shutter speed of the CCD drive section 7 is controlled at a set value via a shutter speed control setting section 11.

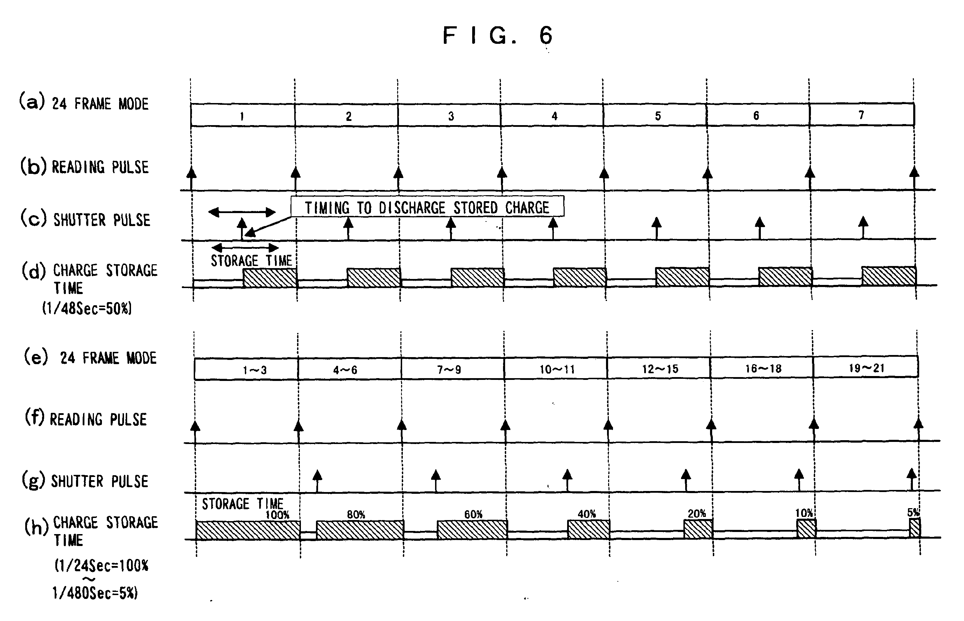

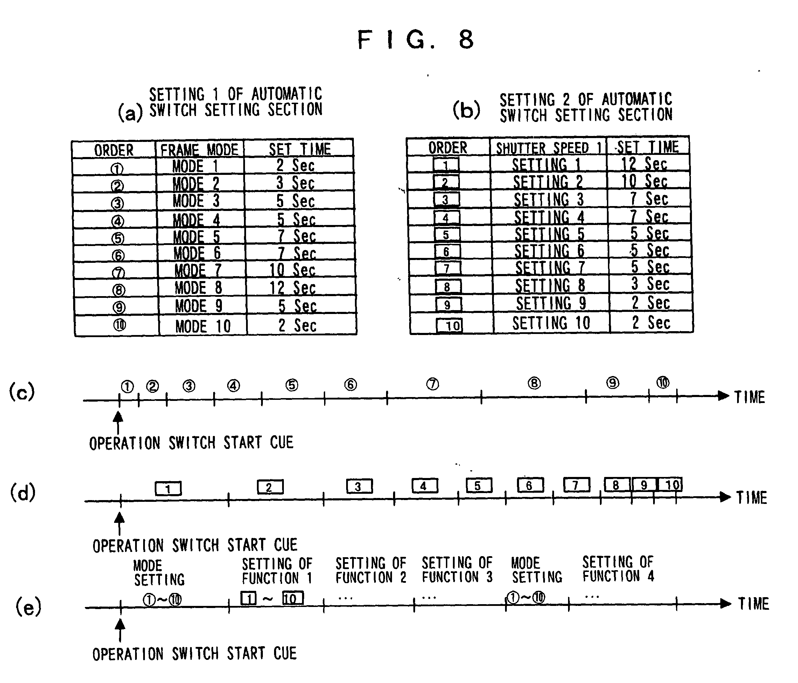

FIG. 6 is an explanatory drawing showing an operation of a shutter speed. FIG. 6 shows the case where a shutter speed is fixed at 50% (1/48 second) with a frame rate of 24 frames and the case where a shutter speed gradually increases from 100% (1/24 second) to 80%, 60%, ... every three frames of the 24 frames. FIG. 8 shows an example of a photographed image when the imaging apparatus of this embodiment is used.

FIG. 6(a) shows a time interval (charge storage time 1/24 second) of one frame when a frame rate is 24 frames. In this case, a reading pulse shown in FIG. 6(b) is outputted from the CCD drive section 7. When a shutter pulse outputted from the shutter speed control setting section 11 is almost 50% of the frame time interval as shown in FIG. 6(c), the charge storage time of a CCD is also 50% as shown FIG. 6(d), so that an imaging signal with a shutter speed of 50% (1/48 second) can be obtained. In this way, a shutter speed can be changed by outputting a shutter pulse to a predetermined position.

To be specific, with a time setting of three frames, the automatic switch setting section 5 has a set value indicating a position where a shutter pulse for determining a shutter speed is generated. The system control section 4 reads setting data from the automatic switch setting section 5 in response to a start cue (trigger) of the operation switch 6.

Based on the read data, a set value is set in the shutter speed control setting section 11 for each set time. Thus, as shown in FIGS. 6(e) to 6(h), the shutter speed control setting section 11 operates such that a reading pulse (FIG. 6(f)) has an interval of 1/24 second and a shutter pulse (FIG. 6(g)) changes its position every three frames. Accordingly, charge storage time changes as shown in FIG. 6 (h) (FIGS. 6(e) to 6(h) show the same state every three frames).

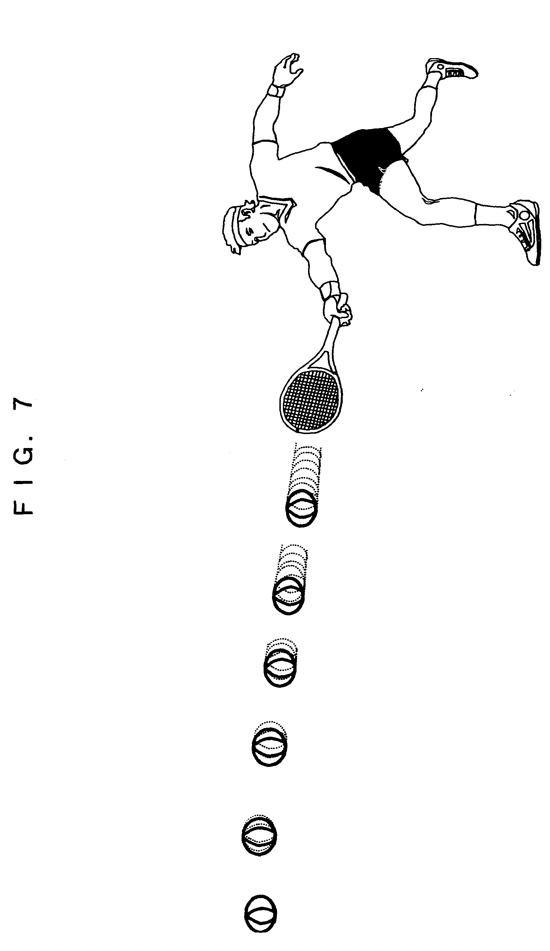

With this automatic operation, a shorter shutter time clarifies an imaging signal. Thus, when a set time is properly selected, for example, when a hit tennis ball is traced as shown in FIG. 7, it is possible to obtain an image in which the ball gradually becomes more visible from the moment when the ball is hit. Also in this case, unprecedented film production is achieved as in the automatic switching of frame rate modes.

Needless to say, in the automatic switch setting section 5, it is possible to freely set frame rates, the set times of shutter speeds of photographing parameters, and the orders of the set times.

According to (Embodiment 2) of the present invention, the automatic switch setting section 5 is provided which stores setting data for switching frame rates and the set values of photographing parameters for each predetermined time period. Thus, it is possible to automatically switch frame rates and photographing parameters for each set time, thereby achieving various kinds of image creation.

### (Embodiment 3)

In the above-described embodiments, the system control section 4 automatically switches frame rates via the frame mode control setting section 9 during photographing as shown in FIG. 1, and the system control section 4 automatically switches the shutter speeds of photographing parameters as well as frame rates via the frame mode control setting section 9 and the shutter speed control setting section 11 during photographing as shown in FIG. 5. The system control section 4 and the automatic switch setting section 5 may be configured as follows: as shown in FIG. 8(b), the shutter speeds of photographing parameters are set in the order of "setting 1" to "setting 10" in the automatic switch setting section 5, the shutter speeds being paired with set times, and as shown in FIG. 8(d), after the system control section 4 detects a trigger made by a one-touch operation of the operation switch 6, a frame rate during photographing is left as it is and shutter speeds are automatically switched in the order of "setting 1" to "setting 10" for each set time set in the automatic switch setting section 5.

FIG. 8(a) shows a specific example of the automatic switch setting section 5 discussed in (Embodiment 1). The system control section 4 and the automatic switch setting section 5 may be configured as follows: frame rates are set in the order of "mode 1" to "mode 10", the modes being paired with set times, and as shown in FIG. 8(c), after the system control section 4 detects a trigger made by a one-touch operation of the operation switch 6, a frame rate during photographing is left as it is and frame rates are automatically switched in the order of "mode 1" to "mode 10" for each set time set in the automatic switch setting section 5.

In the case of FIG. 8(e), an automatic switch setting section 5 for setting frame modes and an automatic switch setting section 5 for setting photographing parameters are prepared, and the system control section 4 performs automatic switching according to the settings of the frame rates and two or more photographing parameters. In this case, when the system control section 4 detects a trigger made by a one-touch operation of the operation switch 6, the photographing parameters are fixed and frame rates are switched for each set time as shown in FIG. 8(c). When "order 1" to "order 10" are completed, the system control section 4 switches a shutter speed (represented as function 1), which is one of the photographing parameters, to "order 1" to "order 10" as shown in FIG 8(d). When the switching is completed, the system control section 4 switches a CCD gain (represented as function 2), which is one of the photographing parameters, to "order 1" to "order 10" as shown in FIG 8(d). When the switching is completed, the system control section 4 switches lens control (represented as function 3), which is one of the photographing parameters, to "order 1" to "order 10" as shown in FIG 8(d). When the switching is completed, the photographing parameters are fixed and frame rates are switched for each set time. When "order 1" to "order 10" are completed, the system control section 4 switches an aperture (represented as function 4), which is one of the photographing parameters, to "order 1" to "order 10" as shown in FIG 8(d). In this way, the system control section 4 may be configured to perform a sequence of automatically switching frame rates and any one of the photographing parameters in a sequential order.

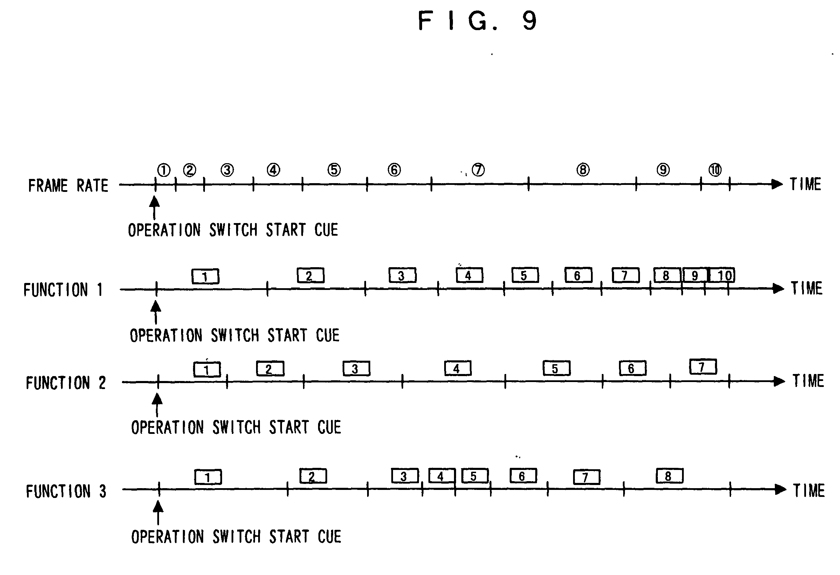

Instead of automatically switching frame rates and any one of the photographing parameters in a sequential order as shown in FIG. 8(e), the systemcontrol section 4 maybe configured as follows: as shown in FIG. 9, frame rates and the settings of the functions of the photographing parameters are automatically switched in parallel in a sequential order in response to a start cue of the operation switch 6.

As described above, according to (Embodiment 3) of the present invention, the automatic switch setting section 5 is provided which stores setting data for switching frame rates and the set values of photographing parameters for each predetermined time period. Thus, it is possible to automatically switch frame rates and photographing parameters for each set time, thereby achieving various kinds of image creation.

### (Embodiment 4)

In the above-described embodiments, a sequence is constructed such that just a trigger made by a one-touch operation of the operation switch 6 causes the system control section 4 to automatically switch frame rates, photographing parameters, and so on according to the setting contents of the automatic switch setting section 5. In (Embodiment 4), without rewriting the set time of the automatic switch setting section 5, a system control section 4 of (Embodiment 4) is configured such that photographing can be performed with a shorter set time for automatic switching by detecting a retrigger in response to a one-touch operation of an operation switch 6.

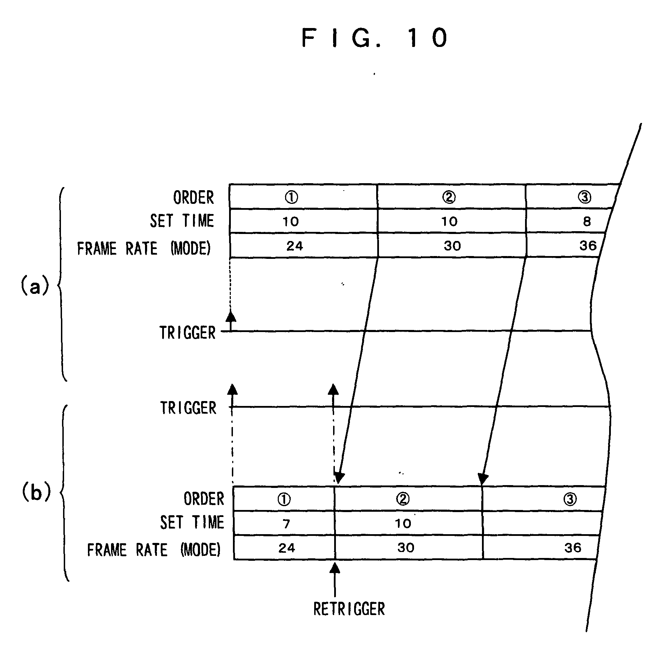

The specific example of FIG. 10 shows that frame rates are automatically switched. In FIG. 10(a), as in (Embodiment 1), when the system control section 4 detects a trigger made by a one-touch operation of the operation switch 6, automatic switching is performed as follows: photographing is performed with a frame rate of 24P over a set time of ten seconds, the frame rate is switched to 30P to perform photographing for ten seconds, and then the frame rate is switched to 36P to perform photographing for eight seconds. Even when the automatic switch setting section 5 is used with the same setting contents, in the case of the system control section 4 of (Embodiment 4), as shown in FIG. 10(b), the system control section 4 detects the first trigger made by a one-touch operation of the operation switch 6, photographing is performed with a frame rate of 24P, and the system control section 4 detects a retrigger made by a one-touch operation of the operation switch 6 within ten seconds of a set time which is set in the automatic switch setting section 5, that is, seven seconds later from the first trigger in this example. In this case, although the set time of ten seconds does not elapse, the photographing is forcibly switched as "order 2" to photographing with a frame rate of 30P, which is set in the automatic switch setting section 5. Also in the case of "order 2", as in "order 1", when a retrigger is made within ten seconds of the set time of "order 2", the system control section 4 switches a frame rate to the setting of "order 3." In this example, since a retrigger is not made within ten seconds of the set time of "order 2," photographing with a frame rate of 30P is performed for ten seconds according to the setting contents of the automatic switch setting section 5.

The system control section 4 is configured such that the reoccurrence of a trigger is detected in each set time, termination is forcefully performed even in the set time to perform automatic switching to the subsequent setting, thereby improving operability.

The above explanation described the case where a change point of a frame rate is advanced during photographing. When a change point of a frame rate is delayed during photographing, the system control section 4 may be configured as follows: a second operation performed on the operation switch 6 is detected in the set time of the current settings, and the current setting contents are not terminated at the set time of the automatic switch setting section 5 but the set time is automatically extended.

### (Embodiment 5)

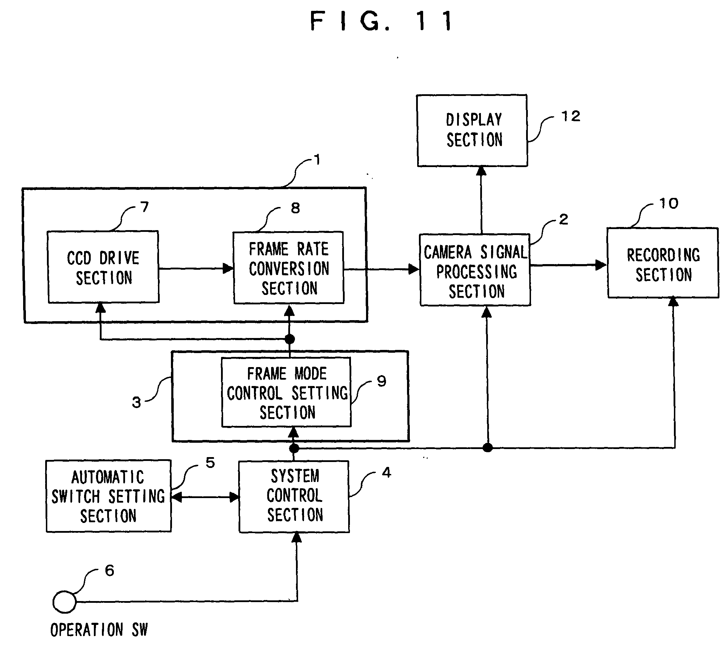

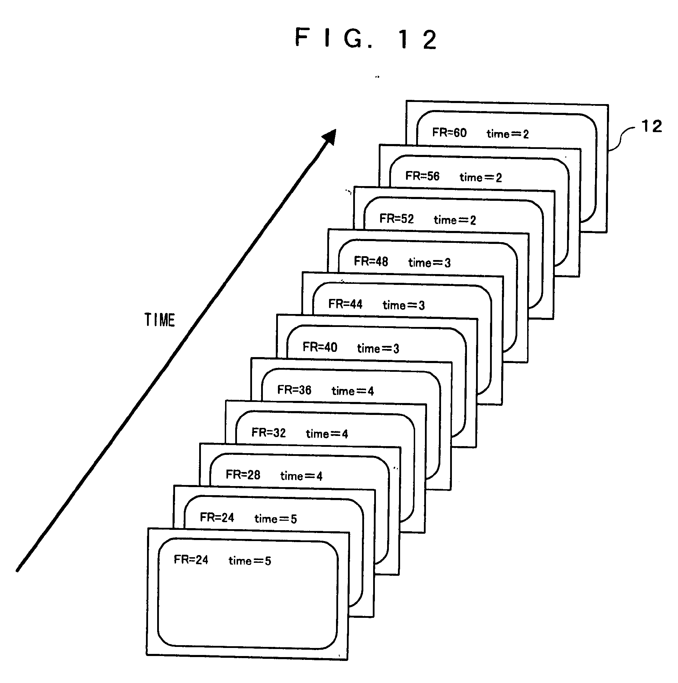

FIGS. 11 and 12 show an imaging apparatus of (Embodiment 5). FIGS. 11 and 12 are different from FIG. 1 illustrating (Embodiment 1) only in that a display section 12 is added to a camera processing section 2. Other configurations are completely the same as those of (Embodiment 1).

The display section 12 is, for example, an electronic view finder for displaying images during photographing. The display section 12 displays images during photographing and, as shown in FIG. 12, displays frame modes at different times and the set times of the frame modes on its screen. The frame modes are set by a system control section 4. With this configuration, the photographer can confirm the set frame modes, the setting contents of photographing parameters, and the set times of the parameters.

This configuration permits the display section 12 to display setting contents and set times, which serve as information for automatic switching. Thus, it is possible to estimate the set frame modes and the time when photographing parameters are switched, thereby offering convenience for photographing work.

Needless to say, any kind of display is acceptable as long as switching timing is recognized on the display of set times. For example, a remaining time or a ratio to a set time is displayed.

Needless to say, instead of sharing the electronic view finder to display images during photographing, the display section 12 may include another display section in addition to the electronic view finder.

### (Embodiment 6)

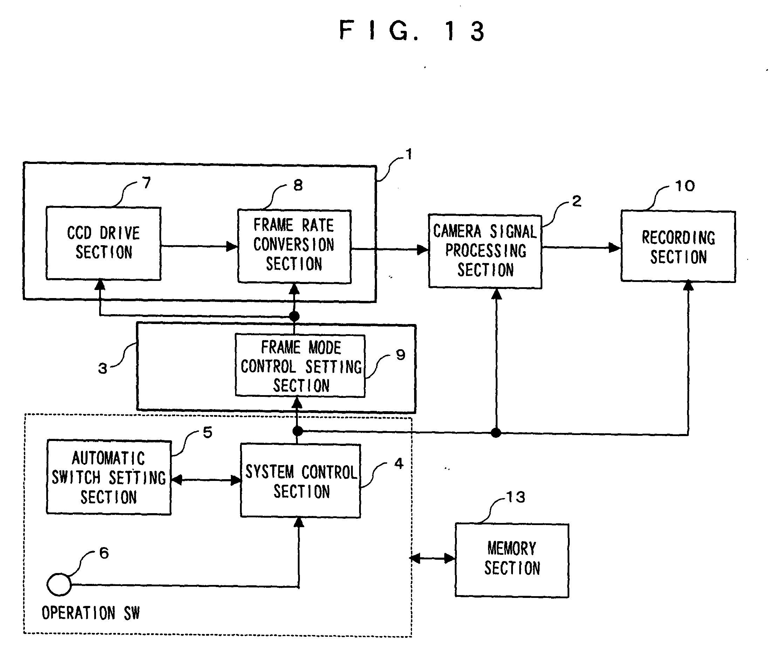

FIG. 13 shows an imaging apparatus of (Embodiment 6). FIG. 13 is different from FIG. 1 illustrating (Embodiment 1) only in that a memory section 13 is added. Other configurations are completely the same as those of (Embodiment 1).

In (Embodiment 4), without rewriting the set time of the automatic switch setting section 5 as shown in FIG. 10, a system control section 4 enables photographing with a shorter set time for automatic switching by detecting a retrigger made by an operation switch 6. In the imaging apparatus configured thus, the system control section 4 records, in the memory section 13, the history of actual set times according to a retrigger made by the operation switch 6.

That is, in (Embodiment 6), it is possible to record, in the memory section 13, the history of actual set times according to a retrigger made by the operation switch 6. The history can be recorded any number of times until a desired setting is made. Information about a determined historymaybe replaced as the data of an automatic switch setting section 5. This replacement is performed by the system control section 4 which transfers data between the automatic switch setting section 5 and the memory section 13.

In this way, it is possible to perform photographing while correcting set times in the automatic switch setting section 5 at an actual photographing site as necessary relative to the frame modes and photographing parameters of the imaging apparatus, set and correct set times any number of times according to actual photographing, replace the value of the automatic switch setting section 5 with the value of the memory section 13, and use refined data as data for automatic function switching, so that higher operability is expected.

### (Embodiment 7)

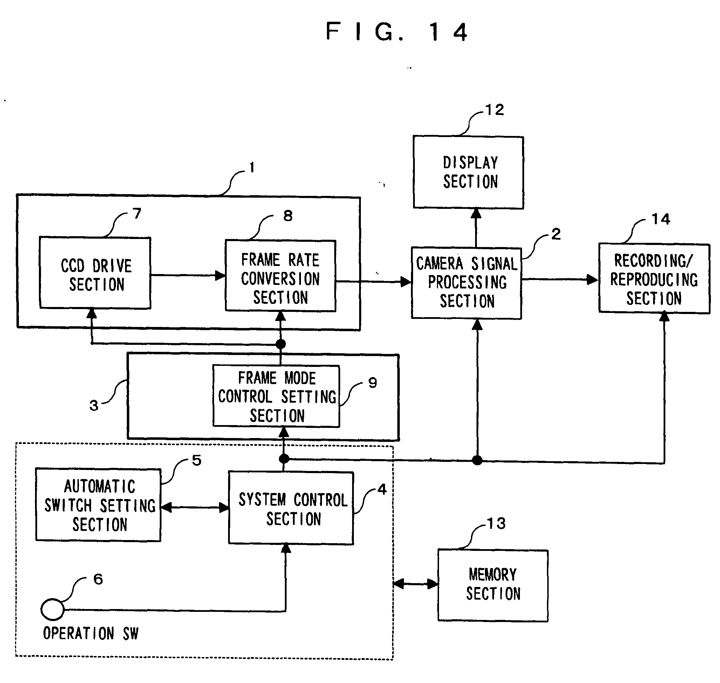

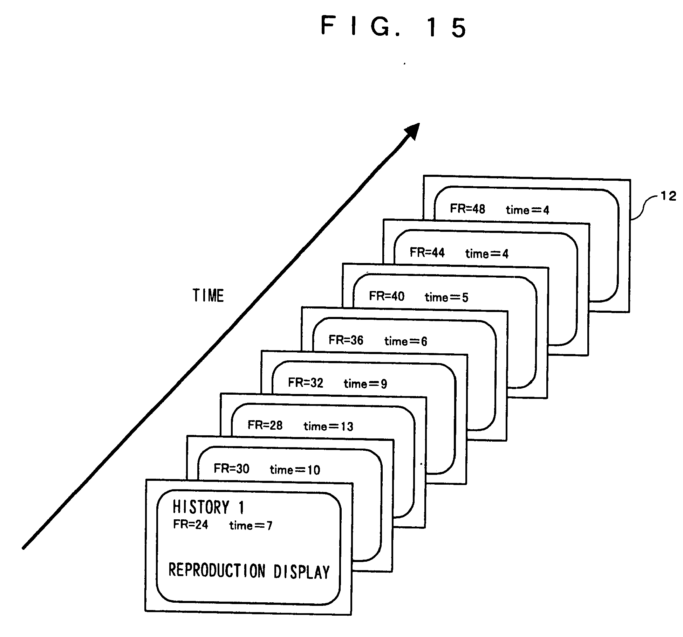

FIG. 14 shows an imaging apparatus of (Embodiment 7). (Embodiment 7) is different from (Embodiment 6) shown in FIG. 13 only in the following point:
A system control section 4 of (Embodiment 7) causes a recording/reproducing section 14 to record in a recording medium the history information of a memory section 13 together with an imaging signal outputted from a camera signal processing section 2. As shown in FIG. 15, the history information of the memory section 13 is displayed on a display section 12 during reproduction.
Needless to say, as in (Embodiment 5), any kind of display is acceptable as long as switching timing is recognized on the display of set times. For example, a remaining time or a ratio to a set time is displayed.
Needless to say, instead of sharing an electronic view finder to display images during photographing, the display section 12 may include another simple display section.
With this configuration, it is possible to record the history information of the memory section 13 together with an imaging signal produced according to the setting of the information, and to reproduce and display the history information together with a reproduction signal, thereby confirming frame modes and photographing parameters which are changed by the setting of automatic function switching.

### (Embodiment 8)

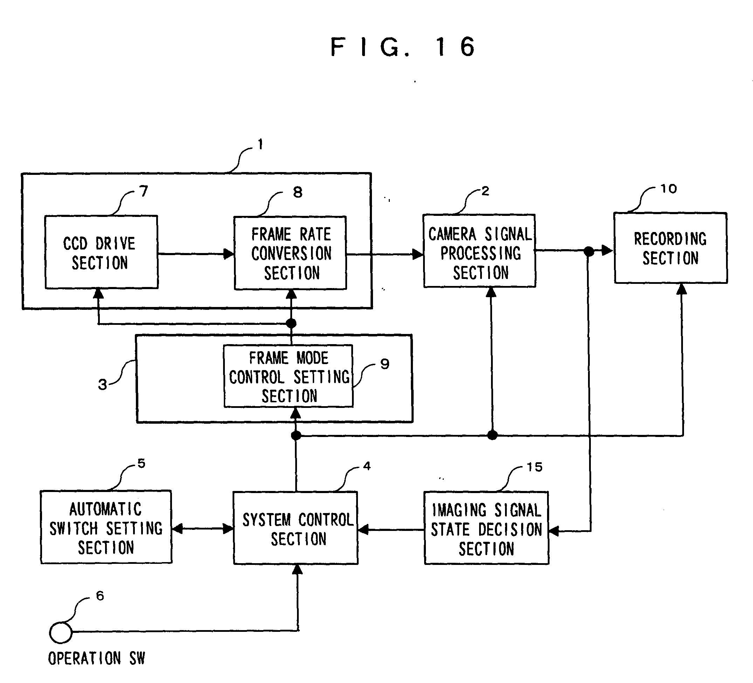

FIG. 16 shows an imaging apparatus of (Embodiment 8). FIG. 16 is different from FIG. 1 illustrating (Embodiment 1) only in that an imaging signal state decision section 15 is added. Other configurations are completely the same as those of (Embodiment 1).

The imaging signal state decision section 15 decides a state of an imaging signal from an image state of an imaging signal system, and a system control section 4 recognizes a decision signal of the imaging signal state decision section 15 and controls the function of automatically switching functions.

For example, based on an imaging signal generated in the output of the camera signal processing section 2, the imaging signal state decision section 15 decides whether the contents of the imaging signal include amotion picture or a still picture. When it is decided that the contents include a motion picture, the system control section 4 performs switching to another setting contents regardless of setting contents designated by an automatic switch setting section 5. To be specific, frame rates are switched to increase a dynamic resolution.

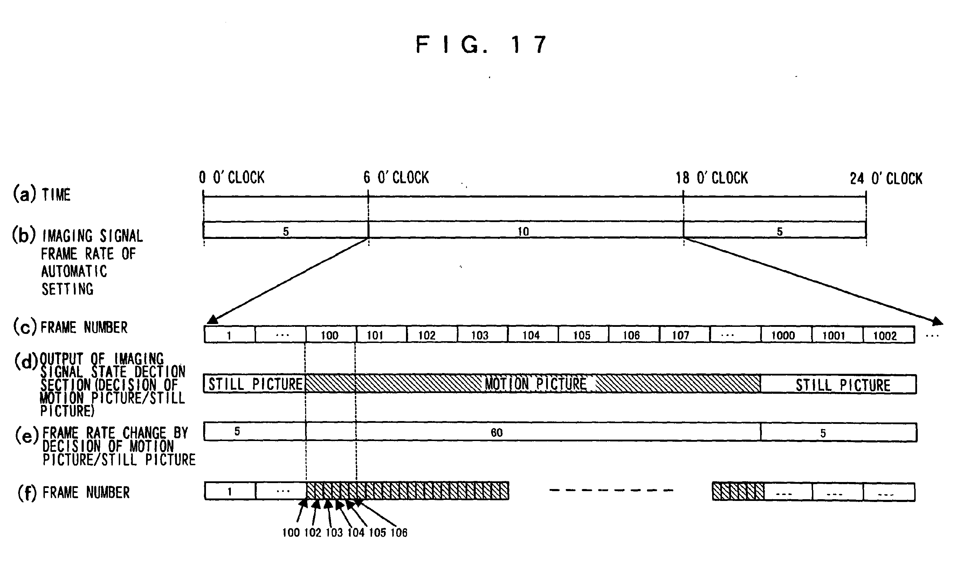

FIG. 17 shows automatic function switching of frame rates when the imaging apparatus is used for a surveillance camera and so on.

For example, frame rates and set times are set in the automatic switch setting section 5 as shown in FIGS. 17(a) and 17(b). The imaging apparatus is operated such that the system control section 4 automatically switches frame rates to five frames per second from 0 o'clock to 6 o'clock, ten frames per second from 6 o'clock to 18 o'clock, and five frames per second from 18 o'clock to 24 o'clock.

As shown in FIG. 17(d), when the imaging signal state decision section 15 decides after 6 o'clock that a still picture is changed to a motion picture from the 100th frame in the setting of ten frames per second of frame rates designated by the automatic switch setting section 5, even if the automatic switch setting section 5 designates a frame rate of ten frames per second, the system control section 4 changes a frame rate to 60 frames per second as shown in FIGS. 17(c), 17(d), 17(e), and 17 (f) and outputs a signal having a large number of frames per second.

Thus, it is possible to increase the number of photographing frames of a subject which is decided to be in a motion picture state and increase a dynamic resolution.

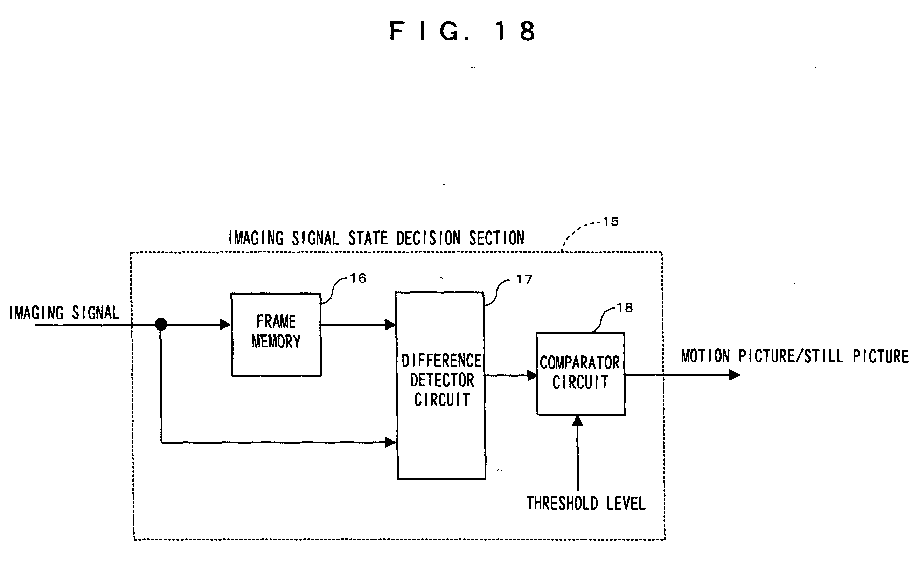

FIG. 18 shows a specif ic structural example of the automatic switch setting section 5 of this case. Reference numeral 16 denotes a frame memory for outputting a signal delayed by one frame or several frames of an imaging signal. Reference numeral 17 denotes a difference detector circuit for detecting a difference between an imaging signal at each time and a video signal which is stored in and read from the frame memory 16. Reference numeral 18 denotes a comparator circuit which compares the output signal of the difference detector circuit 17 with a set threshold level. When the output signal does not exceed the threshold level, it is decided that a still picture is produced. When the output signal exceeds the threshold level, it is decided that a motion picture is produced.

According to (Embodiment 8) of the present invention, in addition to the automatic switch setting section 5 which stores setting data for switching the frame modes of the imaging apparatus or the set values of functions for each predetermined time period, the imaging signal state decision section 15 is further provided which decides the state of an imaging signal, thereby deciding whether the signal is in a motion picture state or a still picture state. The decision signal makes it possible to change the state of a predetermined automatic setting and change the automatic setting suitably for the state of the imaging signal.

Needless to say, the decision signal of the imaging signal state decision section 15 makes it possible to decide not only a motion picture or a still picture but also an amount of noise and a frequency characteristic. Set values can be changed to proper values in response to the decision.

## Claims

1. An imaging apparatus, comprising:
a control setting section for setting a frame mode of an imaging section or a photographing parameter of the imaging section,
an automatic switch setting section in which setting contents to be automatically switched in the control setting section and a set time for implementing the contents are set, and
a system control section which detects an operation of an operation switch and automatically switches the setting contents of the control setting section according to a setting of the automatic switch setting section.

2. The imaging apparatus according to claim 1, wherein the system control section controls the control setting section in such a manner as to detect an operation of the operation switch and switch at least one of the frame mode and the photographing parameter according to the setting of the automatic switch setting section.

3. The imaging apparatus according to claim 1, wherein the system control section controls the control setting section in such a manner as to detect an operation of the operation switch and switch at least one of the frame mode and the photographing parameter according to the setting of the automatic switch setting section, detects that the operation switch is operated again in a set time of a current setting, and forcibly performs automatic switching to subsequent setting contents of the automatic switch setting section.

4. The imaging apparatus according to claim 2 or 3, wherein the system control section detects an operation of the operation switch and automatically switches the frame mode and the photographing parameter in series in a predetermined order.

5. The imaging apparatus according to claim 2 or 3, wherein the system control section detects an operation of the operation switch and automatically switches the frame mode and the photographing parameter in parallel in a predetermined order according to setting contents of the automatic switch setting section.

6. The imaging apparatus according to claim 1, wherein the system control section controls the control setting section in such a manner as to detect an operation of the operation switch and switch at least one of the frame mode and the photographing parameter according to the setting of the automatic switch setting section, detects that the operation switch is operated again in a set time of a current setting, and does not terminate current setting contents in a set time of the automatic switch setting section but automatically extends the set time.

7. The imaging apparatus according to claim 1, further comprising a display section for displaying a state of a current frame mode or photographing parameter.

8. The imaging apparatus according to claim 3 or 6, further comprising a memory section for storing history of corrections made to a set time when the operation switch is operated again.

9. The imaging apparatus according to claim 3 or 6, further comprising a memory section for storing history of corrections made to a set time when the operation switch is operated again, wherein the system control section can replace the set time of the automatic switch setting section with another according to a record of the memory section.

10. The imaging apparatus according to claim 3 or 6, further comprising
a memory section for storing history of corrections made to a set time when the operation switch is operated again, and
a recording/reproducing section which records and reproduces an imaging signal,
wherein the system control section can replace the set time of the automatic switch setting section with another according to a record of the memory section, and history information of the memory section is recorded with the imaging signal by the recording/reproducing section.

11. An imaging apparatus, comprising:
a control setting section for setting a frame mode of an imaging section or a photographing parameter of the imaging section,
an automatic switch setting section in which setting contents to be automatically switched in the control setting section and a set time for implementing the contents are set,
a system control section for automatically switching the setting contents of the control setting section according to a setting of the automatic switch setting section, and
an imaging signal state decision section for deciding an image state of an imaging signal system outputted from the imaging section,
wherein the system control section can detect a change point of the image state according to a decision signal of the imaging signal state decision section and automatically switch the setting contents of the control setting section to another state designated by setting contents of the automatic switch setting.

12. The imaging apparatus according to claim 11, wherein the imaging signal state decision section decides a motion picture/still picture according to the image state of the imaging signal system, and
the system control section detects that a decision signal of the imaging signal state decision section changes from a still picture to a motion picture, and automatically switches the setting contents of the control setting section such that a dynamic resolution of the contents is higher than that of the setting contents of the automatic setting section.

13. The imaging apparatus according to claim 11, wherein the imaging signal state decision section decides an amount of noise and a frequency characteristic of an imaging signal of the imaging signal system, and
the system control section automatically switches the setting contents of the control setting section, according to the decision signal of the imaging signal state decision section, more suitably for a state of the imaging signal than the setting contents of the automatic setting section.
